Europäisches Patentamt

European Patent Office

Office européen des brevets

(19)

(11) Numéro de publication: **0 261 008 B1**

(12) **FASCICULE DE BREVET EUROPEEN**

(45) Date de publication de fascicule du brevet:
**24.04.91**

(51) Int. Cl.⁵: **A01K 97/00, B65D 43/16,**
**E05D 15/50, E05D 7/10**

(21) Numéro de dépôt: **87401898.9**

(22) Date de dépôt: **18.08.87**

(54) **Charnière décrochable, notamment pour un panier-siège de pêcheur.**

(30) Priorité: **19.08.86 FR 8611838**

(43) Date de publication de la demande:
**23.03.88 Bulletin 88/12**

(45) Mention de la délivrance du brevet:
**24.04.91 Bulletin 91/17**

(84) Etats contractants désignés:
**AT BE CH DE ES GB GR IT LI LU NL SE**

(56) Documents cités:
**EP-A- 0 123 751**
**CH-A- 128 676**
**US-A- 4 240 222**

(73) Titulaire: **ETABLISSEMENTS FRANCOIS, MO-**
**SALGUE ET FILS**
**15 Rue du Coq Gaulois**
**Brie Comte Robert (Seine et Marne)(FR)**

(72) Inventeur: **Mossalgue, François**
**39,rue Emile Roux**
**Fontenay sous Bois Val de Marne(FR)**

(74) Mandataire: **Cabinet Pierre HERRBURGER**
**115, Boulevard Haussmann**
**F-75008 Paris(FR)**

Rank Xerox (UK) Business Services

## Description

La présente invention se rapporte à une charnière décrochable pour l'articulation d'un premier élément et d'un second élément, notamment pour l'articulation d'un couvercle sur un corps de boîte.

Cette charnière est notamment destinée à un panier-siège de pêcheur comportant plusieurs corps de boîte superposés.

Les pêcheurs ont l'habitude lors de la pratique de leur sport favori, de s'asseoir sur des sièges de forme trapézoïdale constitués par la superposition de plusieurs compartiments servant à contenir le matériel qui leur est indispensable (hameçons, plombs, fils, appâts, moulinets ...).

Ces paniers-sièges sont le plus souvent constitués par des éléments en bois réunis par des charnières de type classique ; ils ne peuvent, en aucune façon, se démonter pour pouvoir s'adapter aux besoins et sont relativement onéreux aussi bien à la fabrication qu'au stockage.

On connaît par le document US-A-4 240 222, une charnière décrochable du type susmentionné qui est constituée d'une patte principale reliée au premier élément, d'une patte auxiliaire reliée au second élément, ainsi que d'un organe de liaison amovible mobile entre une première position ou position de verrouillage dans laquelle le premier et le second élément sont solidaires, la patte auxiliaire pouvant pivoter autour de la patte principale et de l'organe de liaison, et une seconde position ou position de libération dans laquelle la patte auxiliaire et la patte principale et par suite les deux éléments sont indépendants l'un de l'autre.

On connaît accessoirement par le document CH-A-I28 676 une porte à un battant susceptible de s'ouvrir indifféremment par l'un ou l'autre de ses côtés verticaux.

La présente invention a pour objet, en partant de cet art antérieur, de proposer une charnière décrochable d'un type nouveau permettant de créer des boîtes modulaires de format quelconque, pouvant être utilisées dans un large domaine d'application dont le panier-siège de pêcheur ne constitue qu' un exemple parmi d'autres.

Selon l'invention, cette charnière est caractérisée en ce que l'organe de liaison est muni, d'une part, d'un tenon de fixation dépourvue de symétrie de révolution et susceptible de coulisser dans au moins une ouverture de maintien longitudinale prévue à cet effet dans la patte principale, et, d'autre part, par une tige d'articulation cylindrique parallèle au tenon de fixation et de longueur inférieure à celui-ci, cette tige d'articulation étant susceptible de coulisser dans une ouverture d'articulation cylindrique de la patte auxiliaire de façon à permettre le déplacement de l'organe de liaison de la position de verrouillage à la position de libération et réciproquement.

L'un des avantages essentiels de ce dispositif conforme à l'invention est de pouvoir, à partir d'un même élément, faire office de charnière mais également de fermoir et d'organe d'assemblage de profilés.

Contrairement à l'art antérieur, il est ainsi possible d'obtenir des boîtes modulaires pouvant être montées et démontées en demeurant toujours en position horizontale, évitant ainsi tout risque de chute des objets pouvant être contenu dans les différents compartiments.

Bien entendu, et comme il a déjà été indiqué, cette charnière peut être utilisée dans un domaine totalement différent des paniers-sièges de pêcheurs sans pour cela sortie du cadre de l'invention.

On pourrait, par exemple, penser à équiper des boîtes à outils de telles charnières.

Généralement, le tenon de fixation est constituée par un ensemble de deux tiges cylindriques parallèles coopérant avec deux perçages cylindriques parallèles correspondant, constituant l'ouverture de maintien.

Dans le cas fréquent dans lequel l'organe de liaison est constitué par un élément en matière plastique, il est possible de mettre directement en place les tiges de fixation dans le moule servant à la fabrication de ces éléments dans lequel elles se trouvent ainsi automatiquement fixées.

Selon une autre caractéristique de l'invention, l'organe de liaison comporte des moyens d'accrochage susceptibles de le maintenir solidaire de la patte principale en position de libération.

Selon une autre caractéristique de l'invention, les moyens d'accrochage sont constitués par deux rainures parallèles tracées sur la surface externe de la patte principale et définissant deux crans d'arrêt pour une barrette élastique solidaire de l'organe de liaison, ces crans correspondant respectivement aux positions de verrouillage et de libération de l'organe de liaison.

Cette configuration permet de maintenir toujours les tiges de fixation dans l'ouverture de maintien de la patte principale et, par suite, d'éviter toute perte intempestive de l'organe de liaison.

Selon une autre caractéristique de l'invention, l'organe de liaison est muni, sur sa surface externe, d'un ergot facilitant sa manipulation.

Cet ergot fait, en effet, office de butée pour le doigt de l'utilisateur lorsqu'il veut faire passer l'organe de liaison de la position de verrouillage à la position de libération ou vice versa.

La caractéristique essentielle de la charnière décrite ci-dessus est liée à son caractère démontable et à sa facilité de manipulation.

L'invention se rapporte également à une boîte, notamment à un élément de panier-siège de pêcheur comportant un couvercle constituant le second élément fermant un corps de boîte cubique ou parallélépipédique constituant le premier élément.

Selon l'invention, cette boîte est caractérisée en ce que le corps de boîte est muni, à chacun de ses angles, d'une charnière décrochable telle que celle qui a été décrite ci-dessus, la patte principale de ces charnière étant constituée par une cornière et les ouvertures de maintien de ces cornières se faisant face deux à deux, respectivement sur deux côtés opposés du corps de boîte.

Par suite de cette configuration, le couvercle du corps de boîte est amovible et celui-ci peut être à volonté articulé sur l'une ou sur l'autre de deux faces parallèles.

En plus de son rôle propre, chacune des charnières de la boîte fait en même temps office de verrou ou de targette en empêchant l'ouverture intempestive du couvercle et en outre, de butée sur laquelle peut venir s'appuyer le couvercle lorsqu'il est ouvert.

Bien entendu, selon l'invention, le corps de boîte comporte un fond ainsi que quatre faces latérales ; selon une autre caractéristique de l'invention, ces faces latérales sont constituées par des profilés métalliques, notamment à section en forme de U comportant, à chacune de leurs extrémités, une encoche destinée à venir en place dans des gorges prévues à cet effet sur la face interne des cornières de manière à permettre le montage de l'ensemble.

Conformément à cette configuration qui est de nature à faciliter notablement la fabrication de la boîte, les cornières des charnières ont un quatrième rôle correspondant à l'assemblage des profilés en U.

Grâce à cette configuration, la boîte conforme à l'invention peut être fabriquée pour un prix de revient très peu élevé.

L'invention se rapporte également à une boîte modulaire constituée par la superposition d'au moins deux des corps de boîte décrits ci-dessus, chacun de ces corps de boîte jouant le rôle de second élément (ou de couvercle) pour le corps de boîte placé immédiatement au-dessous de lui.

Selon l'invention, une telle boîte modulaire est caractérisée en ce que les cornières de chaque corps de boîte comportent à leur partie inférieure, une ouverture supplémentaire parallèle à l'ouverture de maintien et jouant le rôle d'ouverture d'articulation pour le corps de boîte placé immédiatement au-dessous.

On arrive ainsi à obtenir une boîte modulaire entièrement démontable et pouvant comporter un nombre quelconque de corps de boîte superposés étant donné que ceux-ci sont tous identiques, la seule obligation consistant à associer un couvercle au corps de boîte supérieur.

Cette disposition permet de faciliter dans une large mesure le st ockage des boîtes modulaires.

L'invention se rapporte également à un panier-siège de pêcheur comportant un compartiment inférieur à la partie supérieure duquel est emboîtée une boîte modulaire telle que décrite ci-dessus dont le couvercle constitue le siège du pêcheur.

Selon l'invention, un tel panier-siège de pêcheur est caractérisé en ce que le compartiment inférieur est constitué par une partie principale notamment en tôle emboutie de section approximativement carrée ou rectangulaire, bordée à sa partie supérieure par un cadre constitué par des profilés métalliques, notamment à section en forme de U, similaire à celle des corps de boîte de la boîte modulaire et comportant à chacune de leurs extrémités, une encoche destinée à venir en prise dans des gorges prévues à cet effet sur la face interne de cornières de charnières décrochables, telles que les charnières décrites ci-dessus, les profilés métalliques comportant, sur leur périphérie inférieure, une ailette métallique permettant leur assemblage avec la partie principale, notamment au moyen de boulons de mise en place.

La partie de ces boulons faisant saillie vers l'intérieur du compartiment inférieur peut, conformément à l'invention, être utilisée pour servir d'appui à un plateau amovible pouvant, lui aussi, contenir divers éléments tels qu'hameçons, appâts ...

Le panier-siège conforme à l'invention est ainsi totalement démontable et peut comporter un nombre quelconque des corps de boîte.

L'invention permet ainsi de faciliter, dans une large mesure, la fabrication et le stockage des paniers-sièges de pêcheurs.

Les caractéristiques de la charnière, de la boîte ainsi que du panier-siège qui font l'objet de l'invention seront décrites plus en détail en se référant aux dessins annexés, dans lesquels :

- les figures 1a et 1b sont des coupes schématiques montrant les différents éléments constitutifs de la charnière conforme à l'invention, respectivement en position de verrouillage et en position de libération,

- la figure 2 représente une configuration particulièrement avantageuse de cette charnière,

- la figure 3 est un détail montrant l'extrémité d'un profilé constituant les faces latérales d'un corps de boîte conforme à l'invention,

- la figure 4 montre l'imbrication des profilés dans les cornières,

- la figure 5 est une vue en perspective d'une boîte conforme à l'invention,

- la figure 6 est une vue en perspective d'un panier-siège de pêcheur conforme à l'invention,

- la figure 7 est une vue en coupe au niveau de la partie supérieure du compartiment inférieur du panier-siège.

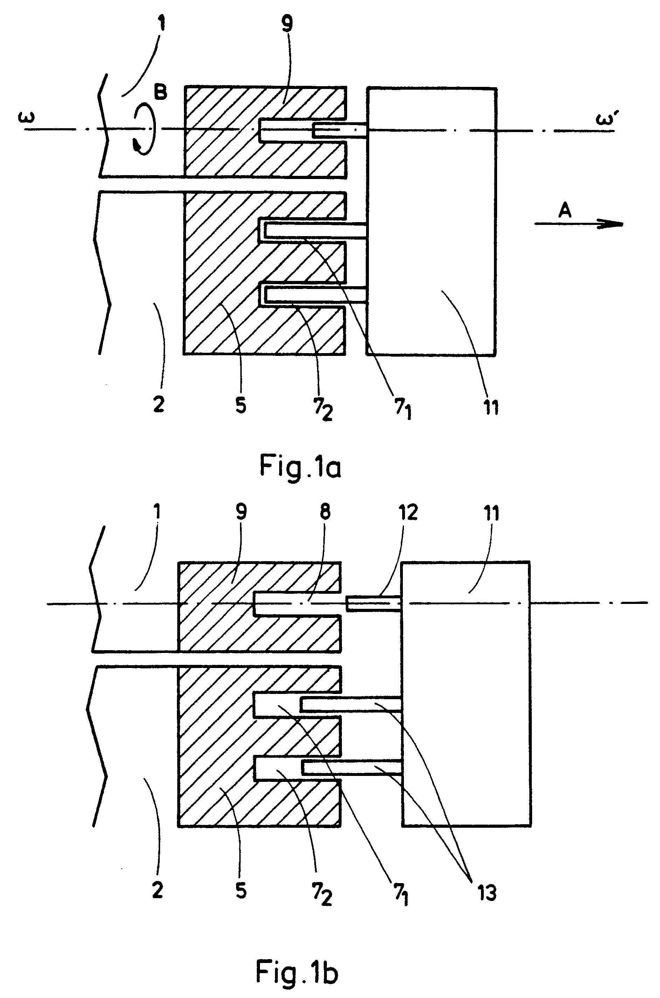

Selon les figures 1a et 1b, la charnière objet de l'invention a pour objet de permettre l'articulation sur un premier élément 2, notamment un corps de boîte, d'un second élément 1, notamment un couvercle.

Selon les figures, cette charnière est constituée d'une patte principale 5 reliée au premier élément 2 d'une patte auxiliaire 9 reliée au second élément 1 et d'un organe de liaison amovible 11 destiné à relier la patte principale 5 à la patte auxiliaire 9, et par suite, le premier et le second élément en laissant à ce dernier, une liberté de rotation autour d'un axe $\omega$-$\omega'$.

Selon l'invention, la charnière comporte également des moyens permettant de déplacer l'organe de liaison 11 entre une première position ou position de verrouillage représentée sur la figure 1a, et dans laquelle la patte principale 5 coopère avec la patte auxiliaire 9 et une seconde position ou position de libération représentée sur la figure 1b et dans laquelle la patte principale 5 et la patte auxiliaire 9, et par suite les éléments 1 et 2, sont indépendants l'un de l'autre.

Selon ces figures, l'organe de liaison 11 est pourvu, d'une part, de deux tiges de fixation 13 susceptibles d'être introduites à force dans deux ouvertures de maintien longitudinales $7_1$ et $7_2$ de la patte principale 5, et d'autre part, d'une tige d'articulation 12 destinée à être introduite à force dans une ouverture d'articulation 8 de la patte auxiliaire 9.

L'organe de liaison 11 est généralement en matière plastique, tandis que les tiges 12 et 13 sont constituées par des cylindres métalliques directement placés dans le moule de fabrication de l'organe de liaison 11.

Par ailleurs, les ouvertures 8, $7_1$, $7_2$ ont des dimensions identiques et sont parallèles et coplanaires ; la tige d'articulation 12 a une longueur plus faible que les tiges de fixation 13 de façon telle que, à partir de la position de verrouillage représentée sur la figure 1a, dans laquelle la patte auxiliaire 9 et par suite le second élément 1 sont maintenus solidaires de la patte principale 5 et du premier élément 2 tout en pouvant librement tourner autour de l'axe $\omega$-$\omega'$ selon la flèche B, il est possible, en exerçant manuellement une traction selon la flèche A sur l'organe de liaison 11, d'amener celui-ci dans la position de libération représentée sur la figure 1b ; dans cette position, la tige d'articulation 12 est totalement sortie de l'ouverture d'articulation 8, et donc, les pattes 5 et 9 et les éléments 1 et 2 sont totalement indépendants l'un de l'autre, mais, les pattes de fixation 13 demeurent dans les ouvertures de maintien $7_1$ et $7_2$, et donc, l'organe de liaison 11 se trouve toujours solidaire de la patte principale 5.

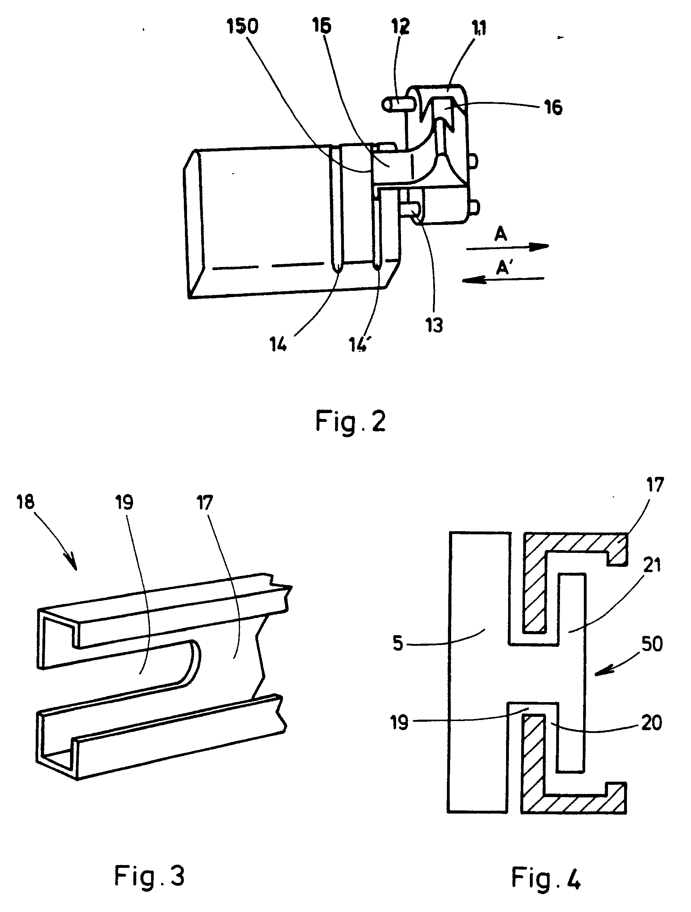

Selon la figure 2, et pour empêcher toute sortie intempestive de l'organe de liaison 11 de la patte principale 5 au-delà de la position représentée sur la figure 1b, l'organe 11 est muni, sur sa surface externe, d'une barrette élastique 15 susceptible de venir s'imbriquer dans des rainures 14 et 14' prévues sur la surface externe de la patte principale 5, de façon à définir deux crans d'arrêt correspondant aux deux positions différentes de l'organe de liaison 11 représentées sur les figures 1a et 1b.

Si l'on considère simultanément les figures 1a, 1b et 2, il est clair que, lorsque l'extrémité 150 de la barrette élastique 15 se trouve bloquée dans le cran interne 14, l'organe de liaison 11 se trouve dans la position d'articulation représentée sur la figure 1a, dans laquelle la tige d'articulation 12 fait office de charnière ; au contraire, lorsque cette extrémité 150 se trouve bloquée dans le cran externe 14', la tige 12 est dégagée de la patte auxiliaire 9 et l'organe de liaison 11 se trouve dans la position de libération représentée sur la figure 1b.

Comme il a déjà été indiqué, pour faire passer l'organe de liaison de la position représentée sur la figure 1a à la position représentée sur la figure 1b, ou vice versa, il suffit d'exercer sur celui-ci une traction représentée par les flèches A et A' sur la figure 2. Pour faciliter ce mouvement, il est prévu sur la face supérieure de l'organe 11, un ergot 16 servant d'appui, notamment au pouce de l'utilisateur.

Dans ce qui suit, pour maintenir la clarté des dessins, la barrette élastique 15 ne sera pas représentée ; il est bien entendu préférable de la prévoir pour éviter toute perte de l'organe de liaison 11.

Par ailleurs, la présence des deux ouvertures de maintien $7_1$ et $7_2$ coopérant avec deux tiges de fixation 13 de l'organe de liaison 11 est absolument indispensable pour éviter toute rotation de ces éléments l'un par rapport à l'autre lorsque la tige d'articulation 12 fait office d'axe d'articulation du premier élément 2 par rapport au second élément 1.

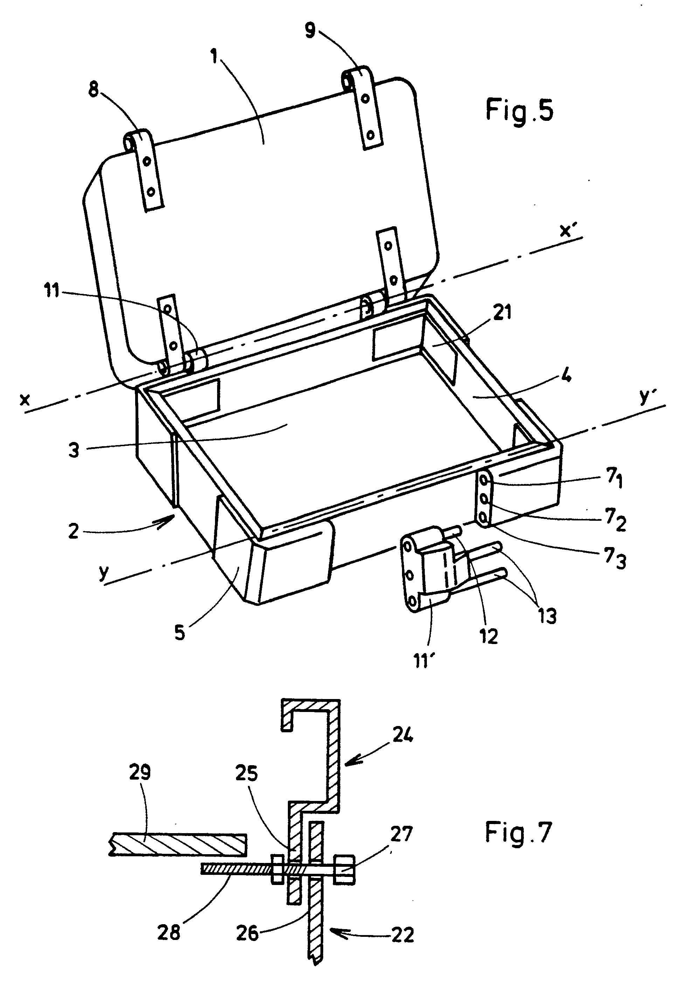

Selon la figure 5, quatre charnières du type ci-dessus sont destinées à permettre l'articulation d'un couvercle 1 (constituant le second élément) sur un corps de boîte 2 (constituant le premier élément) muni d'un fond 3 et de quatre faces latérales à angle droit 4.

Conformément à cette configuration, chacune des pattes principales des charnières est constituée par une cornière 5, notamment en matière plastique, fixée au niveau de l'intersection de deux faces latérales perpendiculaires 4 et 4' d'une façon qui sera décrite plus en détail dans la suite de cet exposé.

Chacune de ces cornières 5 est munie, sur l'un de ses chants latéraux 6, de trois ouvertures $7_1$, $7_2$,

$7_3$. Les ouvertures $7_1$ et $7_2$ correspondent aux ouvertures de maintien susmentionnées ; le rôle de l'ouverture $7_3$ sera lui aussi décrit plus en détail dans la suite de cet exposé.

Par ailleurs, chacune des pattes auxiliaires des charnières est constituée par un élément plat 9 fixé notamment au moyen de vis à la partie inférieure 10 du couvercle 1, et recourbée à sa partie externe, pour définir l'ouverture d'articulation 8 ; conformément à cette configuration, il est bien entendu nécessaire que lorsque le couvercle 1 se trouve replié sur le corps de boîte 2, la patte 9 se trouve au-dessus de l'orifice de maintien de la cornière 5 constituant la patte principale qui lui est associé.

Selon la figure 5, le couvercle 1 est articulé sur le corps de boîte 2 par les charnières placées sur ses faces arrières, c'est-à-dire selon l'axe arrière x-x' ; il pourraît, bien entendu, tout aussi bien être articulé suivant l'axe avant y-y-', ou encore il serait possible de désolidariser totalement le couvercle et le corps de boîte.

Selon les figures 3, 4 et 5, les faces latérales 4 du corps de boîte 2 qui entourent le fond 3 sont constituées par des profilés métalliques 17 à section en forme de U (représentés sur la figure 3) et comportant, à chacune de leurs extrémités 18, une encoche longitudinale 19 permettant le montage à l'équerre des différentes faces latérales ainsi que des quatre cornières 5 : en effet, et comme représenté plus précisément sur la figure 4, ces dernières sont munies, sur leur face arrière 50, de gorges longitudinales 20 limitées par un bourrelet 21 et destinées à venir s'imbriquer dans les encoches 19.

Le montage des faces latérales 4 est par suite extrêmement simple.

Selon la figure 4, on a bien représenté schématiquement chacune des cornières 5 équipant chacun des coins du corps de boîte 2, mais, pour simplifier le dessin, on n'a pas représenté les organes de liaison 11 associés à la face avant x-y.

Par contre, un organe de liaison 11' comportant deux tiges de fixation 13 de grande longueur et une tige 12 de plus faible longueur a été représenté ; celui-ci a pour but de permettre la mise en place au-dessous du corps de boîte 2, d'un autre corps de boîte 2' exactement similaire mais non représenté pour lequel le corps de boîte 2 jouerait le rôle de second élément (couvercle) ; pour permettre une telle superposition, chaque cornière 5 est pourvue, sur l'un de ses chants, d'une troisième ouverture $7_3$ identique aux ouvertures de maintien $7_1$ et $7_2$ et placée au-dessous. Cette ouverture $7_3$ constitue, en fait, l'ouverture de verrouillage (similaire à l'ouverture 8) du corps de boîte placé au-dessous du corps de boîte 2.

On arrive, ainsi selon l'invention, à superposer un nombre quelconque de corps de boîtes identiques 2 en les articulant soit sur leur face avant y-y' soit sur leur face arrière x-x'.

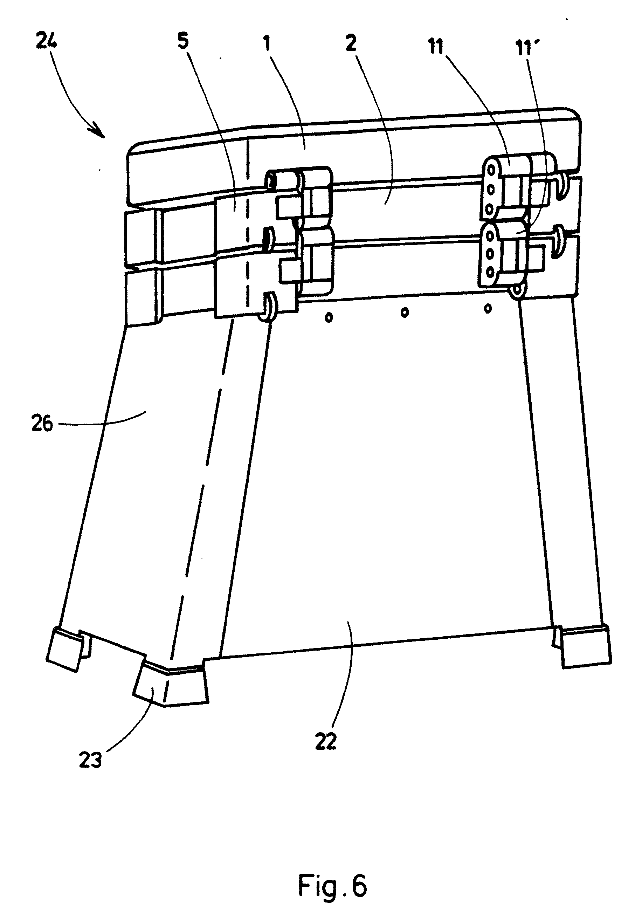

La figure 6 représente un panier-siège de pêcheur qui est une application directe des boîtes représentées sur la figure 5.

Ce panier-siège est constitué par un compartiment inférieur en tôle emboutie 22 reposant sur des pieds 23 à la partie supérieure duquel est emboîtée une boîte telle que représentée sur la figure 5 et constituée par un couvercle 1 constituant le siège du pêcheur articulée sur un corps de boîte 2, au moyen de charnières telles que décrites ci-dessus en référence aux figures 1 à 5.

La figure 6 représente un exemple ne comportant qu'un seul corps de boîte 2. Bien entendu, le nombre de corps de boîte superposés pourrait être quelconque sans pour cela sortir du cadre de l'invention.

Selon les figures 6 et 7, le compartiment inférieur 22 comporte une partie principale 26 bordée à sa partie supérieure par un cadre 24 de même dimension que le corps de boîte 2. Ce cadre 24 est, selon la figure 4, constitué de profilés identiques au profilé 17 (figures 3 et 4) mais comportant sur leur périphérie inférieure une ailette métallique 25 permettant leur assemblage avec la partie principale 26 du compartiment inférieur 22, notamment au moyen de boulons 27 dont l'extrémité 28 dépassant à l'intérieur du compartiment 22 fait office de support pour un plateau 29 pouvant, lui aussi, contenir des éléments tels qu'hameçons, fils de pêche, appâts ...

En conséquence, et selon ces figures, le compartiments inférieur joue, grâce à son cadre 24, exactement le même rôle que les corps de boîte 2.

**Revendications**

1. Charnière décrochable pour l'articulation d'un premier élément et d'un second élément, notamment pour l'articulation d'un couvercle (1) sur un corps de boîte (2), constituée :
   - d'une patte principale (5) reliée au premier élément (2),
   - d'une patte auxiliaire (9) reliée au second élément (1),
   - d'un organe de liaison amovible (11) mobile entre une première position ou position de verrouillage dans laquelle le premier et le second éléments (2, 1) sont solidaires, la patte auxiliaire (9) pouvant pivoter autour de la patte principale (5) et de l'organe de liaison (11) et une seconde position ou position de libération dans laquelle la patte auxiliaire (9) et la patte principale (5), et par suite, les deux éléments (2, 1) sont indépendants l'un de l'autre,

charnière caractérisée en ce que l'organe de liaison (11) est muni, d'une part, d'un tenon de fixation (13) dépourvue de symétrie de révolution et susceptible de coulisser dans au moins une ouverture de maintien longitudinale $(7_1, 7_2)$ prévue à cet effet dans la patte principale (5), et, d'autre part, par une tige d'articulation cylindrique (12) parallèle au tenon de fixation (13) et de longueur inférieure à celui-ci, cette tige d'articulation étant susceptible de coulisser dans une ouverture d'articulation cylindrique (8) de la patte auxiliaire de façon à permettre le déplacement de l'organe de liaison de la position de verrouillage à la position de libération et réciproquement.

2. Charnière selon la revendication 1, caractérisée en ce que le tenon de fixation (13) est constituée par un ensemble de deux tiges cylindriques parallèles coopérant avec deux perçages cylindriques parallèles correspondants constituant l'ouverture de maintien $(7_1, 7_2)$.

3. Charnière selon l'une quelconque des revendications 1 et 2, caractérisée en ce que l'organe de liaison (11) comporte des moyens d'accrochage (15) susceptibles de le maintenir solidaire de la patte principale (5) en position de libération.

4. Charnière selon la revendication 3, caractérisée en ce que les moyens d'accrochage sont constitués par deux rainures parallèles (14, 14') tracées sur la surface externe de la patte principale (5) et définissant deux crans d'arrêt pour une barrette élastique (15) solidaire de l'organe de liaison (11), ces crans correspondant respectivement aux positions de verrouillage et de libération de l'organe de liaison (11).

5. Boîte, notamment élément de panier-siège de pêcheur, comportant un couvercle (1) constituant le second élément fermant un corps de boîte cubique ou parallélépipèdique constituant le premier élément caractérisée en ce que le corps de boîte (2) est muni à chacun de ses angles d'une charnière décrochable (5) selon l'une quelconque des revendications 1 à 4, la patte principale (5) de ces charnières étant constituée par une cornière et les ouvertures de maintien $(7_1, 7_2)$ de ces cornières (5) se faisant face deux à deux respectivement sur deux côtés (x, x', y, y') opposés du corps de boîte (2).

6. Boîte selon la revendication 5, dans laquelle le corps de boîte comporte un fond (3) ainsi que quatre faces latérales (4), caractérisée en ce que les faces latérales (4) sont constituées par des profilés métalliques (17) notamment à section en forme de U, comportant à chacune de leurs extrémités une encoche (19) destinée à venir en prise dans des gorges (20) prévues à cet effet sur la face interne (50) des cornières (5) de manière à permettre le montage de l'ensemble.

7. Boîte modulaire constituée par la superposition d'au moins deux corps de boîte (2, 2') selon l'une quelconque des revendications 5 et 6, surmontés par un couvercle (1), chacun des corps de boîte (2, 2') jouant le rôle de second élément pour le corps de boîte placé immédiatement au-dessous de lui, boîte modulaire caractérisée en ce que les cornières (5) de chaque corps de boîte comportent, à leur partie inférieure, une ouverture supplémentaire $(7_3)$ parallèle à l'ouverture de maintien $(7_1, 7_2)$ et jouant le rôle d'ouverture d'articulation pour le corps de boîte placée immédiatement au-dessous.

8. Panier-siège de pêcheur comportant un compartiment inférieur (22) à la partie supérieure duquel est emboîtée une boîte modulaire selon la revendication 7, dont le couvercle 1 constitue le siège du pêcheur, panier-siège caractérisé en ce que le compartiment inférieur (22) est constitué par une partie principale (26) notamment en tôle emboutie, de section approximativement carrée ou rectangulaire, bordée à sa partie supérieure par un cadre (24) constitué par des profilés métalliques notamment à section en forme de U, similaire à celle des corps de boîte de la boîte modulaire et comportant à chacune de leurs extrémités une encoche (19) destinée à venir en prise dans des gorges (20) prévues à cet effet sur la face interne (50) de cornières (5) de charnières décrochables selon l'une quelconque des revendications 1 à 4, les profilés métalliques (24) comportant, sur leur périphérie inférieure, une ailette métallique (25) permettant leur assemblage avec la partie principale (26), notamment au moyen de boulons de mise en place (27).

## Claims

1. A detachable hinge for articulating a first element and a second element, particularly for articulating a lid (1) on a box body (2), comprising :

- a main lug (5) connected to the first element (2),
- an auxiliary lug (9) connected to the second element (1),
- a removable connecting member (11) adapted for movement between a first position or locking position in which the first and second elements (2, 1) are rigid, the auxiliary lug (9) being capable of pivoting about the main lug (5) and the connecting member (11) and a second position or released position in which the auxiliary lug (9) and the main lug (5) and consequently the two elements (2, 1) are independent of each other, the said hinge being characterised in that the connecting member (11) is provided on the one hand with a fixing peg (13) bereft of symmetry of revolution and adapted to slide in at least one longitudinal supporting aperture ($7_1$, $7_2$) provided for the purpose in the main lug (5) and, on the other, a cylindrical hinge pin (12) parallel with the fixing peg (13) and of a shorter length than this latter, the hinge pin being adapted to slide in a cylindrical hinging aperture (8) in the auxiliary lug in order to allow displacement of the connecting member from the locking position to the release position and vice versa.

2. A hinge according to Claim 1, characterised in that the fixing peg (13) consists of an assembly of two cylindrical and parallel pegs cooperating with two corresponding cylindrical parallel bores constituting the support aperture ($7_1$, $7_2$).

3. A hinge according to either of Claims 1 or 2, characterised in that the connecting member (11) comprises hooking means (15) adapted to maintain it rigid with the main lug (5) in the released position.

4. A hinge according to Claim 3, characterised in that the hooking means consist of two parallel grooves (14, 14') traced on the outer surface of the main lug (5) and defining two stop notches for a resilient bar (15) rigid with the connecting member (11), the said notches corresponding respectively to the positions for locking and releasing the connecting member (11).

5. A box, particularly an element of a fisherman's seat-creel, comprising a lid (1) constituting the second element which encloses a cubic or parallelepiped box body constituting the first element, characterised in that the box body (2) is provided in each of its corners with a detachable hinge (5) according to any one of Claims 1 to 4, the main lug (5) of these hinges consisting of an angle member and supporting apertures ($7_1$, $7_2$) for these angle members (5) which face each other in pairs respectively on two opposite sides (x, x', y, y' ) of the box body (2).

6. A box according to Claim 5 in which the box body comprises a bottom (3) and four lateral faces (4), characterised in that the lateral faces (4) are constituted by metal profiled sections (17), particularly channel sections, comprising at each of their ends a notch (19) adapted to engage grooves (20) provided for the purpose on the inside face (50) of the angle members (5) in order to permit the assembly to be fitted together.

7. A modular box constituted by the superimposition of at least two box bodies (2, 2') according to any one of Claims 5 or 6, surmounted by a lid (1), each of the box bodies (2, 2') acting as the second element for the box body placed immediately beneath it, the said modular box being characterised in that the angle members (5) of each box body comprise in their bottom part an additional aperture ($7_3$) parallel with the supporting aperture ($7_1$, $7_2$) and acting as a hinging aperture for the box body which is placed immediately underneath.

8. A fisherman's seat-creel comprising a bottom compartment (22) in the upper part of which there is fitted a modular box according to Claim 7, the lid (1) of which constitutes the fisherman's seat, the said seat-creel being characterised in that the lower compartment (22) consists of a main part (26) particularly of drawn metal plate and of approximately square or rectangular cross-section, edged at the top by a frame (24) consisting of metal profiled sections, particularly channel sections, similar to that of the box body of the modular box and comprising at each of their ends a notch (19) adapted to engaged grooves (20) provided for the purpose on the inside face (50) of angle members (5) of detachable hinges according to any one of claims 1 to 4, the metal profiled sections (24) comprising on their lower periphery a metal fin (25) permitting their assembly with the main part (26), especially by means of positioning bolts (27).

## Ansprüche

1. Abnehmbares Scharnier zur Gelenkverbindung eines ersten und eines zweiten Elementes, insbesondere zur Gelenkverbindung eines Deckels (1) auf einer Zarge (2), umfassend:
   - ein mit dem ersten Element (2) verbundenes Hauptscharnierband (5),
   - ein mit dem zweiten Element (1) verbundenes Hilfsscharnierband (9),
   - ein abnehmbares Verbindungselement (11), das beweglich ist zwischen einer ersten oder Verriegelungsposition, in der das erste und das zweite Element (2,1) miteinander verbunden sind und in der das Hilfsscharnierband (9) um das Hauptschließband (5) und um das Verbindungselement (11) drehbar ist, und einer zweiten oder Freigabestellung, in welcher das Hilfsscharnierband (9) und das Hauptscharnierband (5) und infolgedessen die beiden Elemente (2,1) unabhängig voneinander sind,
   **dadurch gekennzeichnet,**
   daß das Verbindungselement (11) einerseits mit einem nicht rotationsymmetischen Befestigungszapfen (13) versehen ist, der dazu geeignet ist, in zumindest einer, der zu diesem Zweck im Hauptscharnierband (5) vorgesehenen, longitudinalen Halteöffnungen ($7_1, 7_2$) zu gleiten, und andererseits mit einem zum Befestigungszapfen (13) parallelen, zylindrischen Gelenkstift (12) versehen ist, der kürzer ist als der Befestigungszapfen (13) und dazu geeignet ist, so in einer zylindrischen Gelenkverbindungsöffnung (8) des Hilfsscharnierbandes zu gleiten, daß das Verbindungselement aus einer Verriegelungs- in eine Freigabestellung und umgekehrt verschiebbar ist.

2. Scharnier nach Anspruch 1,
   **dadurch gekennzeichnet,**
   daß der Befestigungszapfen (13) durch einen Satz zweier paralleler zylindrischer Stifte gebildet wird, die mit zwei korrespondierenden, parallelen, zylindrischen Bohrungen zusammenwirken, die die Halteöffnungen ($7_1, 7_2$) bilden.

3. Scharnier nach einem der Ansprüche 1 und 2,
   **dadurch gekennzeichnet,**
   daß das Verbindungselement (11) Verhakungsmittel (15) umfaßt, die es in Freigabestellung mit dem Hauptscharnierband (5) verbunden halten.

4. Scharnier nach Anspruch 3,
   **dadurch gekennzeichnet,**
   daß die Verhakungsmittel durch zwei parallele Rillen (14, 14') gebildet werden, die auf der äußeren Oberfläche des Hauptschließbandes (5) verlaufen und zwei Raste für einen elastischen Steg (15) festlegen, der mit dem Verbindungselement (11) verbunden ist, und die jeweils den Verriegelungs- und Freigabestellungen des Verbindungselementes (11) entsprechen.

5. Kasten, insbesondere Teil der Sitzkiste für Angler, umfassend einen das zweite Element bildenden Deckel (1), der eine das erste Elemente bildende würfeloder quaderförmige Zarge (2) verschließt,
   **dadurch gekennzeichnet,**
   daß die Zarge (2) an jeder ihrer Ecken mit einem abnehmbaren Scharnier (5) nach einem der Ansprüche 1 bis 4 versehen ist, daß das Hauptscharnierband (5) dieser Scharniere durch ein Winkelprofil gebildet ist und daß sich die Halteöffnungen ($7_1, 7_2$) dieser Winkelprofile jeweils paarweise auf zwei gegenüberliegenden Seiten (x, x', y, y') der Zarge (2) gegenüberliegen.

6. Kasten nach Anspruch 5, in welchem die Zarge einen Boden (3) sowie vier Seitenflächen (4) umfaßt,
   **dadurch gekennzeichnet,**
   daß die Seitenflächen durch Metallprofile (17) mit einem insbesondere U-förmigen Querschnitt gebildet sind, die auf jedem ihrer äußeren Enden einen Einschnitt (19) aufweisen, der dazu bestimmt ist, mit den Vertiefungen (20) in Eingriff zu treten, die zu diesem Zweck auf der Innenseite (50) des Winkelprofils (5) so vorgesehen sind, daß sie die Montage der Anordnung ermöglichen.

7. Modulkasten, gebildet durch die Übereinanderlagerung von zumindest zwei Zargen (2, 2') nach einem der Ansprüche 5 und 6, die mit einem Deckel (1) versehen ist, wobei jede der Zargen für die unmittelbar oberhalb von ihr plazierte Zarge die Rolle des zweiten Elementes spielt,
   **dadurch gekennzeichnet,**
   daß die Winkelprofile (5) jeder Zarge in ihrem unteren Teil eine zu den Halteöffnungen ($7_1, 7_2$) parallele, zusätzliche Öffnung ($7_3$) aufweisen, welche die Rolle von Öffnungen von Gelenkverbindungen für die unmittelbar oberhalb von ihr plazierte Zarge spielen.

8. Sitzkiste für Angler, umfassend ein Oberteil, in das ein Modulkasten gemäß Anspruch 7 eingesetzt ist, bei dem der Deckel (1) den Sitz des Anglers bildet, und ein unterhalb des Oberteils gelegenes Fach (22),

**dadurch gekennzeichnet,**

daß das untere Fach (22) aus einem insbesondere aus Buckelblech bestehenden Hauptteil (26) mit einem annähernd quadratischen oder rechteckigen Querschnitt gebildet ist, der in seinem oberen Teil von einem Rahmen (24) aus einem insbesondere U-förmigen Metallprofil eingefaßt ist, der demjenigen der Zarge der Modulkiste ähnlich ist und auf jeder seiner äußeren Enden einen Einschnitt (19) aufweist, der dazu bestimmt ist, mit den Vertiefungen (20) in Eingriff zu treten, die zu diesem Zweck auf der Innenseite der abnehmbaren Scharniere nach einem der Ansprüche 1 bis 4 vorgesehen sind, wobei die Metallprofile an ihrem unteren Rand einen Steg (25) umfassen, der ihre Verbindung mit dem Hauptteil (26) insbesondere mittels Fixierschrauben (27) gestattet.

EP 0 261 008 B1

Fig.1a

Fig.1b

Fig. 2

Fig. 3

Fig. 4

Fig.5

Fig.7

Fig. 6